(19) Europäisches Patentamt
European Patent Office
Office européen des brevets

(11) **EP 4 567 147 A1**

(12) **EUROPEAN PATENT APPLICATION**
published in accordance with Art. 153(4) EPC

(43) Date of publication:
**11.06.2025 Bulletin 2025/24**

(21) Application number: 23872067.6

(22) Date of filing: **20.09.2023**

(51) International Patent Classification (IPC):
*C22C 38/00* (2006.01)   *B22F 10/28* (2021.01)
*C21D 6/00* (2006.01)   *C21D 9/00* (2006.01)
*C21D 9/46* (2006.01)   *C22C 38/14* (2006.01)

(52) Cooperative Patent Classification (CPC):
**B22F 10/28; C21D 6/00; C21D 9/00; C21D 9/46;
C22C 38/00; C22C 38/14**

(86) International application number:
**PCT/JP2023/034049**

(87) International publication number:
**WO 2024/070839 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 JP 2022157399**

(71) Applicant: **JFE Steel Corporation
Tokyo 100-0011 (JP)**

(72) Inventor: **CHIBA, Tadachika
Tokyo 100-0011 (JP)**

(74) Representative: **Hoffmann Eitle
Patent- und Rechtsanwälte PartmbB
Arabellastraße 30
81925 München (DE)**

(54) **MARAGING STEEL, MEMBER, AND METHOD FOR PRODUCING SAME**

(57) Provided are a maraging steel having an excellent aging behavior and a method for manufacturing the maraging steel.

A maraging steel, the steel having a chemical composition containing, by mass%, C: 0.02% or less, Si: 0.1% or less, Mn: 0.1% or less, P: 0.01% or less, S: 0.01% or less, N: 0.01% or less, Ni: 12% to 25%, Co: 5% to 12%, Mo: 2% to 7%, Ti: 0.5% to 1.5%, Al: 0.01% to 0.1%, and the balance being iron and incidental impurities, the steel having a steel microstructure containing, in terms of area fraction, 90% or more of a strain-induced martensite phase.

EP 4 567 147 A1

**Description**

Technical Field

The present invention relates to a maraging steel and a member which are excellent in terms of aging behavior and with which it is possible to reduce aging treatment time, and methods for manufacturing the steel and the member.

Background Art

A maraging steel is an aging-precipitation type high strength steel sheet which is used in a wide range of industrial fields including a space aeronautical field and a commercial application field including golf-club heads nowadays and which is also used for a three-dimensional additive manufacturing product recently. The maraging steel is used after having been subjected to an aging treatment in a temperature range of 400°C to 550°C following a solution treatment so that intermetallic compounds including $Ni_3Ti$ are precipitated in a steel sheet microstructure. However, the maraging steel is classified as a high material cost steel grade because of not only a high alloy cost but also low production efficiency due to the fact that an aging treatment generally takes a long time of about three hours.
For example, Patent Literature 1 discloses a technique for reducing aging treatment time. Patent Literature 1 discloses a method for performing a gas nitriding treatment on a maraging steel sheet in which a gas nitriding treatment is performed at a temperature of 420°C to 470°C for duration time of 600 seconds to 3600 seconds under the condition of an ammonia gas decomposition ratio of 1% to 6%. Patent Literature 1 describes that, according to this method, by performing a heat treatment for a comparatively short duration time, it is possible to obtain a maraging steel which is able to be used for the hoop of a steel belt for continuously variable transmission (CVT).

Citation List

Patent Literature

PTL 1: Japanese Examined Patent Application Publication No. 7-116585

Summary of Invention

Technical Problem

However, in the case of Patent Literature 1 described above, although a technique relating to the reduction of the time for a gas nitriding treatment is disclosed, there is an increase in manufacturing costs due to a gas nitriding treatment being performed, and it is not possible to use the maraging steel for, for example, a three-dimensional additive manufacturing product having an internal cavity or the like. Therefore, there is a demand for developing a maraging steel excellent in terms of aging behavior which does not require a high manufacturing cost process such as a gas nitriding treatment process or the like and with which it is possible to reduce aging treatment time.
The present invention has been completed in view of the situation described above, and an object of the present invention is to provide a maraging steel having an excellent aging behavior and a member for which such a maraging steel having an excellent aging behavior is used, and methods for manufacturing such a maraging steel and such a member.
Incidentally, the term "excellent aging behavior" denotes a case where k defined by equation (3) below in relation to $k_1$, which satisfies equation (1) below, and $k_2$, which satisfies equation (2) below, is 1.05 or more.

$$YS_1 = k_1 logt + YS \quad equation\ (1)$$

$$YS_2 = k_2 logt + YS \quad equation\ (2)$$

$$k = k_2/k_1 \quad equation\ (3)$$

Here:

YS: in the present invention, the yield strength (0.2%-proof strength) of steel before an aging treatment is performed and after a solution process has been performed, in the case where a treatment in a heating process (in which heating is performed to a heating temperature equal to or higher than the Ac3 point and equal to or lower than a temperature of Ac3 + 50°C and holding is performed at the heating temperature described above for a holding time of 3000 seconds or less) nor a treatment in a cooling process (in which cooling is performed on the heated steel to a cooling stop temperature of 50°C or lower at an average cooling rate of 8°C/s or higher) is not performed,

$YS_1$: in the present invention, the yield strength (0.2%-proof strength) of steel after an aging treatment (aging treatment at a temperature of 400°C or higher and 550°C or lower) following a solution process has been performed, in the case where the treatment in the heating process described above nor the treatment in the cooling process described above is not performed,

$YS_2$: in the present invention, the yield strength (0.2%-proof strength) of steel after the aging treatment described above following a solution process has been performed, in the case where the treatment in the heating process described above and the treatment in the cooling process described above are performed after the solution process has been performed and before the aging treatment described above is performed,

t: aging time of 1 second to 10800 seconds,

$k_1$: aging coefficient (when an aging treatment following a solution process has been performed, in the case where the treatment in the heating process nor the treatment in the cooling process is not performed),

$k_2$: aging coefficient (when an aging treatment following a solution process has been performed, in the case where the treatment in the heating process and the treatment in the cooling process are performed after the solution process has been performed and before the aging treatment is performed).

Incidentally, all the conditions (temperature conditions, cooling rate conditions, and the like) applied for the treatment (treatment in the solution process) performed on the steel for measuring $YS$, $YS_1$, and $YS_2$ described above are identical among $YS$, $YS_1$, and $YS_2$, and all the conditions (temperature conditions and the like) applied for the treatment (aging treatment in the aging treatment process) performed on the steel for measuring $YS_1$ and $YS_2$ are also identical among $YS_1$ and $YS_2$.

In addition, $YS$, $YS_1$, and $YS_2$ are measured by performing a tensile test in accordance with JIS Z 2241 (2011).

Incidentally, since the equation $k = k_2/k_1 = \{(YS_2 - YS)/\log t\}/\{(YS_1 - YS)/\log t\}$ holds, the relational expression "$k \geq 1.05$" denotes a case in which $YS_2$ in equation (2), for which the conditions according to the present invention are applied, is larger than $YS_1$, in the case where the aging time t is identical in equation (1) and equation (2).

In addition, this means that, in the case where $YS_2$ in equation (2) and $YS_1$ in equation (1) have the same value, the aging time required for obtaining such a value under the conditions for equation (2) is shorter than that under the conditions for equation (1).

That is, since the aging time required for obtaining target yield strength under the conditions for equation (2) is shorter than that under the conditions for equation (1), a case where the expression "$k \geq 1.05$" holds is determined as a case of an excellent aging behavior in the present invention.

In addition, the term "maraging steel" in the present invention denotes a steel whose strength is increased by performing an aging treatment so that intermetallic compounds are precipitated in a microstructure and which contains Ni, Co, Mo, and Ti to be precipitated in the form of intermetallic compounds.

Solution to Problem

To solve the problems described above, the present inventors diligently conducted investigations regarding the microstructure of a maraging steel before an aging treatment is performed and heat treatment conditions and, as a result, found that, by performing a heating treatment in a temperature range from the Ac3 point to a temperature of Ac3 + 50°C for a short time of 3000 seconds or less so that strain-induced martensite to austenite reverse transformation occurs, and by performing rapid cooling to room temperature so that recrystallization does not occur in austenite, since strain-induced martensite is formed in the steel sheet, it is possible to significantly reduce aging treatment time.

The present invention has been completed on the basis of the findings described above, and, according to the present invention, for example, it is possible to provide a maraging steel having a yield strength of 1800 MPa or higher after an aging treatment has been performed for a significantly shortened treatment time.

Incidentally, in the case of the present invention, unlike in the case of rolling, forging or the like, since it is possible to induce strain by only performing a heat treatment, it is possible to perform an aging treatment even on a product which has been formed into a product shape.

The subject matter of the present invention is as follows.

[1] A maraging steel, the steel having a chemical composition containing, by mass%,

C: 0.02% or less,
Si: 0.1% or less,
Mn: 0.1% or less,
P: 0.01% or less,

S: 0.01% or less,
N: 0.01% or less,
Ni: 12% to 25%,
Co: 5% to 12%,
Mo: 2% to 7%,
Ti: 0.5% to 1.5%,
Al: 0.01% to 0.1%, and
the balance being iron and incidental impurities,
the steel having a steel microstructure containing, in terms of area fraction, 90% or more of a strain-induced martensite phase.

[2] A member including the maraging steel according to item [1] above.
[3] A method for manufacturing a maraging steel, the method including:

a solution process of performing a solution treatment on a steel having the chemical composition according to item [1] above at a temperature of 800°C or higher and thereafter cooling the steel to room temperature;
a heating process of heating the steel after the solution process has been performed to a heating temperature equal to or higher than an Ac3 point and equal to or lower than a temperature of Ac3 + 50°C and holding the heated steel at the heating temperature for a holding time of 3000 seconds or less;
a cooling process of cooling the steel after the heating process has been performed to a cooling stop temperature of 50°C or lower at an average cooling rate of 8°C/s or higher; and
an aging treatment process of performing an aging treatment on the steel after the cooling process has been performed at a temperature of 400°C or higher and 550°C or lower to obtain a maraging steel.

[4] A method for manufacturing a member, the method including a process of performing at least one of forming work and joining work on the maraging steel according to item [1] above to obtain a member.

Advantageous Effects of Invention

According to the present invention, it is possible to provide a maraging steel having an excellent aging behavior and a member for which such a maraging steel having an excellent aging behavior is used, and methods for manufacturing such a maraging steel and such a member. By using the maraging steel excellent in terms of aging behavior according to the present invention, since it is possible to reduce aging treatment time, it is possible to decrease manufacturing costs. In addition, there is no particular limitation on the maraging steel according to the present invention and the member (product) for which the maraging steel is used, and the maraging steel and the member may be used for steel including thin steel sheets (including thin steel sheet for automobiles, thin steel sheet for home electrical appliances, and thin steel sheet for electrical apparatuses), die assembly, three-dimensional additive manufacturing products, and the like.

Description of Embodiments

Hereafter, embodiments of the present invention will be described. Here, the present invention is not limited to the embodiments described below.

(Maraging steel)

The maraging steel according to the present invention has a chemical composition containing, by mass%, C: 0.02% or less, Si: 0.1% or less, Mn: 0.1% or less, P: 0.01% or less, S: 0.01% or less, N: 0.01% or less, Ni: 12% to 25%, Co: 5% to 12%, Mo: 2% to 7%, Ti: 0.5% to 1.5%, Al: 0.01% to 0.1%, and the balance being iron and incidental impurities, the steel having a steel microstructure containing, in terms of area fraction, 90% or more of a strain-induced martensite phase.

In the case of the maraging steel according to the present invention, when k is defined as a ratio $k_2/k_1$ by using $k_1$, which satisfies equation (1) below, and $k_2$, which satisfies equation (2) below, it is possible to obtain a k of 1.05 or more.

$$YS_1 = k_1 \log t + YS \quad \text{equation (1)}$$

$$YS_2 = k_2 \log t + YS \quad \text{equation (2)}$$

$$k = k_2/k_1 \quad \text{equation (3)}$$

Here:

YS: in the present invention, the yield strength (0.2%-proof strength) of steel before an aging treatment is performed and after a solution process has been performed, in the case where a treatment in a heating process (in which heating is performed to a heating temperature equal to or higher than the Ac3 point and equal to or lower than a temperature of Ac3 + 50°C and holding is performed at the heating temperature described above for a holding time of 3000 seconds or less) nor a treatment in a cooling process (in which cooling is performed on the heated steel to a cooling stop temperature of 50°C or lower at an average cooling rate of 8°C/s or higher) is not performed,

$YS_1$: in the present invention, the yield strength (0.2%-proof strength) of steel after an aging treatment (aging treatment at a temperature of 400°C or higher and 550°C or lower) following a solution process has been performed, in the case where the treatment in the heating process described above nor the treatment in the cooling process described above is not performed,

$YS_2$: in the present invention, the yield strength (0.2%-proof strength) of steel after the aging treatment described above following a solution process has been performed, in the case where the treatment in the heating process described above and the treatment in the cooling process described above are performed after the solution process has been performed and before the aging treatment described above is performed,

t: aging time of 1 second to 10800 seconds,

$k_1$: aging coefficient (when the aging treatment following a solution process has been performed, in the case where the treatment in the heating process nor the treatment in the cooling process is not performed),

$k_2$: aging coefficient (when an aging treatment following a solution process has been performed, in the case where the treatment in the heating process and the treatment in the cooling process are performed after the solution process has been performed and before the aging treatment is performed).

Incidentally, all the conditions (temperature conditions, cooling rate conditions, and the like) applied for the treatment (treatment in the solution process) performed on the steel for measuring YS, $YS_1$, and $YS_2$ described above are identical among YS, $YS_1$, and $YS_2$, and all the conditions (temperature conditions and the like) applied for the treatment (aging treatment in the aging treatment process) performed on the steel sheets for measuring $YS_1$ and $YS_2$ are also identical among $YS_1$ and $YS_2$.

It is possible to obtain the maraging steel according to the present invention and the member for which the maraging steel is used in the form of steel sheets including thin steel sheets, die assembly, and additive manufacturing products including three-dimensional additive manufacturing products.

Hereafter, the chemical composition, steel microstructure, and manufacturing method of the maraging steel according to the present invention will be specifically described. Here, the present invention is not limited to the embodiments described below. The method for manufacturing a maraging steel according to the present invention may include a process of manufacturing a cast steel piece by melting and casting a raw material containing the chemical composition described above and a process of manufacturing a steel sheet by performing conventional processes including hot rolling, pickling, cold rolling, and the like after casting has been performed. In addition, it is possible to obtain the maraging steel according to the present invention in the form of additive manufacturing products, and the method for manufacturing the maraging steel may include a process of manufacturing an additive manufacturing product by using a conventional method for manufacturing a three-dimensional additive manufacturing product.

For example, the manufacturing method described above may include a process of heating the steel sheet or the cast steel piece after melting and casting have been performed to a temperature of 1100°C or higher and 1350°C or lower to homogenize a microstructure containing segregation formed when casting is performed and a process of performing hot rolling or forging on the steel sheet or cast steel piece with a finishing temperature of 900°C or higher.

In addition, the manufacturing method described above may include a process of manufacturing a three-dimensional additive manufactured product by repeatedly performing a treatment (powder bed fusion method) in which the raw material powder of a maraging steel is melt by using a laser or electron beam as a heat source.

First, the chemical composition of the maraging steel according to the present invention will be described. Here, in this DESCRIPTION, % used when describing the components of the chemical composition of the maraging steel always denotes mass%.

<C: 0.02% or less>

C is an element which reacts with Ti contained in steel to form TiC in the form of a precipitation, and, in the case where TiC is formed, the formation of Ti-based intermetallic compounds (for example, $Ni_3Ti$, which contributes to an increase in high-temperature strength) is inhibited. Therefore, it is necessary that the C content be small, and, in the present invention, it is possible to realize the effects of the present invention in the case where the C content is 0.02% or less. Therefore, the C content is set to be 0.02% or less. It is preferable that the C content be 0.01% or less or more preferably 0.005% or less.

Although there is no particular limitation on the lower limit of the C content, it is preferable that the C content be 0.001% or more or more preferably 0.002% or more from the viewpoint of manufacturing costs.

<Si: 0.1% or less>

Si is an element which reacts with solid solution O in steel to form oxides, thereby decreasing the toughness of the steel. Therefore, it is necessary that the Si content be small, and, in the present invention, it is possible to realize the effects of the present invention without a decrease in toughness after an aging treatment has been performed in the case where the Si content is 0.1% or less. Therefore, the Si content is set to be 0.1% or less. It is preferable that the Si content be 0.08% or less or more preferably 0.06% or less.

Although there is no particular limitation on the lower limit of the Si content, it is preferable that the Si content be 0.001% or more or more preferably 0.005% or more from the viewpoint of manufacturing costs.

<Mn: 0.1% or less>

Mn is, like Si described above, an element which is likely to form oxides in steel. Therefore, it is necessary that the Mn content be small from the viewpoint of toughness. In the present invention, it is possible to realize the effects of the present invention without a decrease in toughness after an aging treatment has been performed in the case where the Mn content is 0.1% or less. Therefore, the Mn content is set to be 0.1% or less. It is preferable that the Mn content be 0.08% or less or more preferably 0.06% or less.

Although there is no particular limitation on the lower limit of the Mn content, it is preferable that the Mn content be 0.001% or more or more preferably 0.002% or more from the viewpoint of manufacturing costs. It is even more preferable that the Mn content be 0.005% or more or even much more preferably 0.01% or more.

<P: 0.01% or less>

P is an element which decreases the toughness of a steel sheet in the case where the P content is large. Therefore, it is preferable that the P content be small, and, in the present invention, it is possible to realize the effects of the present invention without a decrease in toughness after an aging treatment has been performed in the case where the P content is 0.01% or less. Therefore, the P content is set to be 0.01% or less. It is preferable that the P content be 0.008% or less.

Although there is no particular limitation on the lower limit of the P content, it is preferable that the P content be 0.001% or more or more preferably 0.002% or more from the viewpoint of manufacturing costs.

<S: 0.01% or less>

S is an element which decreases the toughness of a steel sheet in the case where the S content is large. Therefore, it is preferable that the S content be small, and, in the present invention, it is possible to realize the effects of the present invention without a decrease in toughness after an aging treatment has been performed in the case where the S content is 0.01% or less. Therefore, the S content is set to be 0.01% or less. It is preferable that the S content be 0.006% or less or more preferably 0.004% or less.

Although there is no particular limitation on the lower limit of the S content, it is preferable that the S content be 0.001% or more or more preferably 0.002% or more from the viewpoint of manufacturing costs.

<N: 0.01% or less>

N is, like C, an element which reacts with Ti to form TiN in the form of a precipitation, thereby inhibiting the formation of $Ni_3Ti$, which contributes to an increase in high-temperature strength. Therefore, in the present invention it is possible to realize the effects of the present invention in the case where the N content is 0.01% or less. Therefore, the N content is set to be 0.01% or less. It is preferable that the N content be 0.006% or less or more preferably 0.004% or less.

Although there is no particular limitation on the lower limit of the N content, it is preferable that the N content be 0.001% or more or more preferably 0.002% or more from the viewpoint of manufacturing costs.

<Ni: 12% to 25%>

Ni is an element which increases the toughness of a maraging steel and which is necessary to form $Ni_3Ti$ in the form of a precipitation, which contributes to an increase in high-temperature strength. In addition, Ni is an element which is indispensable for forming strain-induced martensite in the present invention. In the case where the Ni content is less than 12%, since strain induced martensite to austenite reverse transformation does not occur when heating is performed to a heating temperature equal to or higher than the Ac3 point and equal to or lower than a temperature of Ac3 + 50°C after solution treatment has been performed, it is not possible to form strain-induced martensite. As a result, it is not possible to achieve the desired aging behavior. Therefore, the Ni content is set to be 12% or more. It is preferable that the Ni content be 14% or more or more preferably 16% or more.

On the other hand, in the case where the Ni content is more than 25%, since a martensite microstructure changes from a lath structure to a lenticular structure or a plate-like structure, it is not possible to achieve the desired strength. As a result, it is not possible to achieve the desired aging behavior. Therefore, the Ni content is set to be 25% or less. It is preferable that the Ni content be 24% or less or more preferably 23% or less.

<Co: 5% to 12%>

Co is an element which promotes the formation of intermetallic compounds including $Fe_2Mo$ in the form of precipitates, and it is possible to realize such an effect in the case where the Co content is 5% or more. In the case where the Co content is less than 5%, since there is an insufficient increase in YS over aging time, it is not possible to achieve a k of 1.05 or more. Therefore, the Co content is set to be 5% or more. It is preferable that the Co content be 6% or more or more preferably 7% or more.

On the other hand, Co is an element which decreases a martensite transformation temperature, and the martensite transformation temperature is equal to or lower than room temperature dependently on the Ni content in the case where the Co content is more than 12%. In such a case, since a martensite microstructure changes from a lath structure to a lenticular structure or a plate-like structure, it is not possible to achieve the desired strength. As a result, it is not possible to achieve the desired aging behavior. Therefore, the Co content is set to be 12% or less. It is preferable that the Co content be 11% or less or more preferably 10% or less.

<Mo: 2% to 7%>

Mo is an element which reacts with Fe to form intermetallic compounds including $Fe_2Mo$ in the form of precipitates, and such precipitation is sufficiently promoted in the case where the Mo content is 2% or more, which results in an increase in high-temperature strength. In the case where the Mo content is less than 2%, since there is an insufficient increase in YS over aging time, it is not possible to achieve a k of 1.05 or more. Therefore, the Mo content is set to be 2% or more. It is preferable that the Mo content be 3% or more.

On the other hand, in the case where the Mo content is more than 7%, since precipitation at grain boundaries excessively progresses, there is a decrease in toughness. Therefore, the Mo content is set to be 7% or less. It is preferable that the Mo content be 6% or less or more preferably 5% or less.

<Ti: 0.5% to 1.5%>

Ti is an element which reacts with Ni in steel to form intermetallic compounds including $Ni_3Ti$ in the form of precipitates to increase high-temperature strength. It is possible to sufficiently realize such an effect in the case where the Ti content is 0.5% or more. In the case where the Ti content is less than 0.5%, since there is an insufficient increase in YS over aging time, it is not possible to achieve a k of 1.05 or more.

Therefore, the Ti content is set to be 0.5% or more. It is preferable that the Ti content be 0.8% or more or more preferably 1.1% or more.

On the other hand, in the case where the Ti content is more than 1.5%, since precipitation at grain boundaries excessively progresses, there is a decrease in toughness. Therefore, the Ti content is set to be 1.5% or less. It is preferable that the Ti content be 1.4% or less or more preferably 1.3% or less.

<Al: 0.01% to 0.1%>

Al is an element which reacts with O in molten steel to form oxides to remove O, that is, an element which is necessary to perform deoxidization for decreasing the O concentration in steel, and, to realize such an effect, it is necessary that the Al content be 0.01% or more. Therefore, the Al content is set to be 0.01% or more. It is preferable that the Al content be 0.03% or more or more preferably 0.05% or more.

On the other hand, although Al is used in a maraging steel as an element with which it is possible to increase strength through precipitation of $Ti_3Al$, in the case where the Al content is more than 0.1%, since precipitation at grain boundaries excessively progresses, there is a decrease in toughness. Therefore, the Al content is set to be 0.1% or less. It is preferable that the Al content be 0.09% or less.

In the chemical composition of the maraging steel according to the present invention, the remaining components which are different from the components described above are iron (Fe) and incidental impurities. It is preferable that the maraging steel according to the present invention has a chemical composition containing the basic components described above and the balance being iron (Fe) and incidental impurities.

Hereafter, the microstructure of the maraging steel according to the present invention and the characteristics thereof will be described.

<90% or more of strain-induced martensite phase in terms of area fraction>

In the present invention, by heating a martensite steel, which has been obtained by performing cooling to room temperature following solution treatment, to a heating temperature equal to or higher than the Ac3 point and equal to or lower than a temperature of Ac3 + 50°C, austenite reverse transformation occurs.

The general austenite reverse transformation of a steel sheet is classified as diffusion-type transformation, in which phase transformation from martensite to austenite occurs due to random rearrangement of atoms. In contrast, in the case where the Ni content is 12% or more, since the austenite reverse transformation occurs in the form of shear-type transformation, which occurs due to coordinated movement of atoms, transformation strain is induced in austenite due to such phase transformation. When such austenite is cooled again, such transformation strain is maintained in the course of martensite transformation, which results in the formation of strain-induced martensite, in which there is a high-density distribution of dislocations, which are likely to become nucleation sites at which intermetallic compounds are precipitated. By performing an aging treatment on such strain-induced martensite, it is possible to reduce aging time significantly. In the case where the area fraction of the strain-induced martensite is less than 90%, it is not possible to realize such an effect of reducing aging time. In addition, in the case where the area fraction of the strain-induced martensite is less than 90%, there may be a case of a decrease in toughness or high-temperature strength due to a variation in strength within the microstructure caused by a variation in the amounts of precipitates in accordance with location.

Therefore, the area fraction of strain-induced martensite is set to be 90% or more. It is preferable that the area fraction of strain-induced martensite be 93% or more or more preferably 95% or more (including 100%).

A method for measuring strain-induced martensite will be described.

The area fraction of strain-induced martensite is determined by cutting a sample to expose a cross section in the thickness direction of the sample, by performing mirror polishing on the cross section, by performing an etching treatment on the polished cross section in a nital etching solution having a concentration of 5 vol% or more, by observing three fields of view at a position located at 1/4 of the thickness of the etched cross section by using a scanning electron microscope (SEM) at a magnification of 1000 times to take microstructure images, and by performing image analysis on the taken microstructure images. Since austenite reverse transformation occurs once in the course of the process of forming strain-induced martensite, and since re-dissolution of intermetallic compounds, which have been precipitated in a heating process, occurs in austenite, the strain-induced martensite has a microstructure which does not contain intermetallic compounds. However, in a region in which austenite reverse transformation does not occur, the intermetallic compounds, which have been precipitated in a heating process, are characterized by darker appearance. Therefore, a microstructure which does not contain such intermetallic compounds is defined as strain-induced martensite, and the area fraction of such a microstructure is calculated in terms of percentage.

In the maraging steel according to the present invention, the area fraction of the remainder of the microstructure which is different from a strain-induced martensite phase is 10% or less. Such remainder may include recrystallized ferrite and austenite.

<Ratio $k = k_2/k_1$: 1.05 or more, when $k_1$ satisfies equation (1) and $k_2$ satisfies equation (2)>

$$YS_1 = k_1 logt + YS \quad equation\ (1)$$

$$YS_2 = k_2 logt + YS \quad equation\ (2)$$

$$k = k_2/k_1 \quad equation\ (3)$$

Here:

YS: in the present invention, the yield strength (0.2%-proof strength) of steel before an aging treatment is performed and after a solution process has been performed, in the case where a treatment in a heating process (in which heating is performed to a heating temperature equal to or higher than the Ac3 point and equal to or lower than a temperature of Ac3 + 50°C and holding is performed at the heating temperature described above for a holding time of 3000 seconds or less) nor a treatment in a cooling process (in which cooling is performed on the heated steel to a cooling stop temperature of 50°C or lower at a cooling rate of 8°C/s or higher) is not performed,

$YS_1$: in the present invention, the yield strength (0.2%-proof strength) of steel after an aging treatment (aging treatment at a temperature of 400°C or higher and 550°C or lower) following a solution process has been performed, in the case where the treatment in the heating process described above nor the treatment in the cooling process described above is not performed,

$YS_2$: in the present invention, the yield strength (0.2%-proof strength) of steel after the aging treatment described above following a solution process has been performed, in the case where the treatment in the heating process described above and the treatment in the cooling process described above are performed after the solution process has been performed and before the aging treatment described above is performed,

t: aging time of 1 second to 10800 seconds,

$k_1$: aging coefficient (when an aging treatment following a solution process has been performed, in the case where the treatment in the heating process nor the treatment in the cooling process is not performed),

$k_2$: aging coefficient (when an aging treatment following a solution process has been performed, in the case where the treatment in the heating process and the treatment in the cooling process are performed after the solution process has been performed and before the aging treatment is performed).

Incidentally, all the conditions (temperature conditions, cooling rate conditions, and the like) applied for the treatment (treatment in the solution process) performed on the steel for measuring YS, $YS_1$, and $YS_2$ described above are identical among YS, $YS_1$, and $YS_2$, and all the conditions (temperature conditions and the like) applied for the treatment (aging treatment in the aging treatment process) performed on the steel for measuring $YS_1$ and $YS_2$ are also identical among $YS_1$ and $YS_2$.

The index of aging behavior is defined by using equation (1), equation (2), and equation (3), and a maraging steel having a k of 1.05 or more is determined as the maraging steel excellent in terms of aging behavior according to the present invention.

The value of k is calculated by using the following method.

It is possible to calculate k by substituting values of yield strength which are determined at plural points of aging time t (at least 2 points of time including 0 seconds and other points of time) into equation (1) and equation (2).

Specifically, at first, an aging treatment is performed on steel which has been subjected only to a solution treatment according to the present invention at a constant temperature of 400°C or higher and 550°C or lower for various lengths of time, a JIS No. 5 tensile test piece is taken from each of the maraging steel which have been treated as described above, a tensile test (in accordance with JIS Z 2241 (2011)) is performed three times for each of the lengths of time, and then, $k_1$ is derived by using equation (1) on the basis of the aging time t and $YS_1$, which has been obtained by performing the tensile test. YS denotes yield strength in the case where the aging time t is 0 seconds, that is, an aging treatment is not performed (neither a treatment in the heating process nor a treatment in the cooling process is performed after the solution process has been performed).

Subsequently, an aging treatment is performed on steel which has been subjected to a solution treatment according to the present invention, a heating process (in which heating is performed to a heating temperature equal to or higher than the Ac3 point and equal to or lower than a temperature of Ac3 + 50°C and holding is performed at the heating temperature for a holding time of 3000 seconds or less), and a cooling process (in which cooling is performed on the heated steel to a cooling stop temperature of 50°C or lower at an average cooling rate of 8°C/s or higher) at the aging temperature of 400°C or higher and 550°C or lower, which is the same aging temperature as that used when $k_1$ is derived, for various lengths of time, a tensile test is performed in the same way as described above, and then, $k_2$ is derived by using equation (2) on the basis of the aging time t and $YS_2$, which has been obtained by performing the tensile test.

Subsequently, by substituting obtained $k_1$ and $k_2$ into equation (3), the value of k is derived.

Incidentally, when k is derived, the aging time t is limited to 1 second or more and 10800 seconds or less. In the case where the aging time t is more than 10800 seconds, there is almost no change in YS or TS due to an aging treatment, and the object of the present invention, that is, an improvement in aging behavior is not realized. Therefore, the aging time t for deriving k is set to be 10800 seconds or less.

Hereafter, the method for manufacturing a maraging steel according to the present invention will be described.

The method for manufacturing a maraging steel according to the present invention includes a solution process of performing a solution treatment on steel having the chemical composition described above at a temperature of 800°C or higher and thereafter cooling the steel to room temperature, a heating process of heating the steel after the solution process has been performed to a heating temperature equal to or higher than the Ac3 point and equal to or lower than a temperature of Ac3 + 50°C and holding the heated steel at the heating temperature described above for a holding time of 3000 seconds or less, a cooling process of cooling the steel after the heating process described above has been performed to a cooling stop temperature of 50°C or lower at an average cooling rate of 8°C/s or higher, and an aging treatment process of performing an aging treatment on the steel after such a cooling process has been performed at a temperature of 400°C or higher and 550°C or lower to obtain a maraging steel.

<Solution process: performing a solution treatment at a temperature of 800°C or higher and thereafter performing cooling to room temperature>

A solution treatment is performed on a maraging steel which is obtained by performing a process of manufacturing a steel sheet or a cast steel piece by melting and casting a raw material containing the chemical composition according to the present invention described above and a process of manufacturing a thin steel sheet by performing conventional processes including hot rolling, pickling, cold rolling, and the like after casting has been performed or which is an additive manufacturing product obtained by using a conventional method for manufacturing a three-dimensional additive manufacturing product. In the case where the solution temperature in the solution treatment is lower than 800°C, since intermetallic compounds which are precipitated in the manufacturing processes described above and other microstructures are insufficiently dissolved, there is a decrease in strength and toughness. Therefore, the solution temperature is set to be 800°C or higher.

It is preferable that the solution temperature be 830°C or higher or more preferably 860°C or higher. Although there is no particular limitation on the upper limit of the solution temperature, it is preferable that the solution temperature be 980°C or lower or more preferably 950°C or lower from the viewpoint of achieving sufficient strength.

In this process, cooling is performed to room temperature after a solution treatment has been performed. Here, the term "room temperature" denotes a temperature of 5°C to 50°C.

<Heating process: performing a heating treatment to a heating temperature equal to or higher than the Ac3 point and equal to or lower than a temperature of Ac3 + 50°C and performing holding at the heating temperature for a holding time of 3000 seconds or less>

<Cooling process: performing cooling to a cooling stop temperature of 50°C or lower at an average cooling rate of 8°C/s or higher>

In the present invention, to reversely transform all the martensite phase which is formed by performing cooling after a solution treatment has been performed into austenite and to form strain-induced martensite by performing cooling thereafter, it is necessary to perform heating at a heating temperature equal to or higher than the Ac3 point.

On the other hand, in the case where such heating temperature is higher than a temperature of Ac3 + 50°C, since transformation strain which has been formed through austenite reverse transformation is eliminated due to recrystallization, the area fraction of strain-induced martensite, which is formed by performing cooling thereafter, is less than 90%. Therefore, the heating temperature in the heating process is set to be a heating temperature equal to or higher than the Ac3 point and equal to or lower than a temperature of Ac3 + 50°C. It is preferable that the heating temperature be equal to or lower than a temperature of Ac3 + 40°C or more preferably equal to or lower than a temperature of Ac3 + 30°C.

In addition, in the case where the holding time after the heating temperature has been reached is more than 3000 seconds, since recrystallization occurs, the area fraction of strain-induced martensite is less than 90%. Therefore, the holding time at the heating temperature is set to be 3000 seconds or less. It is preferable that the holding time be 1500 seconds or less or more preferably 500 seconds or less. That is, the holding time after the heating process until cooling is started in the cooling process is set to be 3000 seconds or less, preferably 1500 seconds or less, or more preferably 500 seconds or less.

Although there is no particular limitation on the lower limit of the holding time at the heating temperature described above, it is preferable that the holding time at the heating temperature described above be 1 second or more or more preferably 5 seconds or more from the viewpoint of operability.

In addition, in the cooling process after the heating process described above of performing heating and holding has been performed, by performing cooling at an average cooling rate of 8°C/s or higher, since it is possible to inhibit recrystallization, and since martensite transformation occurs sufficiently, it is possible to form strain-induced martensite having an area fraction of 90% or more. Therefore, the average cooling rate in the cooling process is set to be 8°C/s or higher. It is preferable that the average cooling rate be 10°C/s or higher or more preferably 12°C/s or higher. In addition, although there is no particular limitation on the upper limit of the average cooling rate, it is preferable that the average cooling rate be 200°C/s or lower or more preferably 100°C/s or lower not to cause shape defects in the cooling process.

In addition, in the cooling process described above, the cooling stop temperature is set to be 50°C or lower. There is no particular limitation on the lower limit of the cooling stop temperature, and it is acceptable that the lower limit be room temperature.

Here, it is possible to determine the Ac3 point described above by performing actual measurement in which thermal expansion or electrical resistance is measured through, for example, Formaster testing when heating is performed.

In addition, it is possible to obtain the average cooling rate described above by dividing a difference (°C) between the cooling start temperature (heating temperature) and the cooling stop temperature by a cooling time (s).

<Aging treatment process: aging treatment at a temperature of 400°C or higher and 550°C or lower>

In the case of a maraging steel, it is possible to achieve high strength by performing an aging treatment to form fine intermetallic compounds. In the case where the aging temperature (temperature at which the aging treatment is performed) is lower than 400°C, there is an increase in aging treatment time which is necessary to form sufficient amounts of intermetallic compounds. Moreover, in the case where the aging temperature is lower than 400°C, it is not possible to realize a sufficient increase in strength, which results in a k of less than 1.05.

On the other hand, in the case where the aging temperature is higher than 550°C, since the formed intermetallic compounds are coarsened, the aging treatment does not contribute to an increase in strength, and there is a decrease in toughness. Therefore, the aging temperature is set to be 400°C or higher and 550°C or lower. It is preferable that the aging temperature be 420°C or higher or more preferably 440°C or higher. In addition, it is preferable that the aging temperature be 530°C or lower or more preferably 510°C or lower.

By using the method described above, it is possible to obtain the maraging steel according to the present invention.

(Member)

Hereafter, the member and the method for manufacturing the same according to the present invention will be described.

The member according to the present invention is obtained by performing at least one of forming work and joining work on the maraging steel according to the present invention. In addition, the method for manufacturing a member according to the present invention includes a process of performing at least one of forming work and joining work on the maraging steel according to the present invention to obtain a member.

The maraging steel according to the present invention has an excellent aging behavior. Therefore, the member manufactured by using the maraging steel according to the present invention also has an excellent aging behavior. In addition, by using the member according to the present invention, weight reduction can be achieved. Therefore, the member according to the present invention can preferably be used for, for example, vehicle body frame parts. The meaning of the "member according to the present invention" includes a welded joint.

Regarding forming work, common working methods including press forming may be used with no restriction. In addition, regarding joining work, spot welding and arc welding, which are common kinds of welding, and riveting, caulking, joining, and the like may be used with no restriction.

EXAMPLES

The present invention will be described in more detail in accordance with examples described below.

A cast steel piece obtained by pouring molten steel prepared by using a high-frequency vacuum melting furnace into a mold was held at a temperature of 1250°C in an Ar atmosphere for 24 hours to perform a homogenizing treatment, subjected to a hot rolling process in which hot rolling was performed to obtain a hot rolled steel sheet having a thickness of 5 mm to 6 mm after heating had been performed at a temperature of 1250°C for 1 hour, and a cold rolling process in which cold rolling was performed with a rolling reduction ratio of 50% to obtain a thin steel sheet having a thickness of 1.4 mm. As a result, thin steel sheets of examples of the present invention and thin steel sheets of the comparative examples having the chemical compositions given in Table 1 were manufactured.

The obtained thin steel sheets were subjected to a heat treatment under the conditions given in Table 2 to obtain the maraging steel (thin steel sheets). Regarding the obtained thin steel sheets, the steel microstructures and the measurement results of the value of k are given in Table 2. Here, the cooling stop temperature in the cooling process was 25°C.

k is a ratio defined by equation (3) below in relation to $k_1$, which is defined by equation (1) below, and $k_2$, which is defined by equation (2) below.

$$YS_1 = k_1 logt + YS \quad \text{equation (1)}$$

$$YS_2 = k_2 \log t + YS \quad \text{equation (2)}$$

$$k = k_2/k_1 \quad \text{equation (3)}$$

Here:

YS: the yield strength (0.2%-proof strength) of steel before an aging treatment is performed and after a solution process has been performed, in the case where a treatment in a heating process nor a cooling treatment in a cooling process is not performed,

$YS_1$: in the present invention, the yield strength (0.2%-proof strength) of steel after an aging treatment following a solution process has been performed, in the case where the treatment in the heating process described above nor the treatment in the cooling process described above is not performed,

$YS_2$: in the present invention, the yield strength (0.2%-proof strength) of steel after an aging treatment process following a solution process has been performed, in the case where the treatment in the heating process described above and the treatment in the cooling process described above are performed after the solution process has been performed and before the aging treatment is performed,

t: aging time of 1 second to 10800 seconds,

$k_1$: aging coefficient (when an aging treatment following a solution process has been performed, in the case where the treatment in the heating process nor the treatment in the cooling process is not performed),

$k_2$: aging coefficient (when an aging treatment following a solution process has been performed, in the case where the treatment in the heating process and the treatment in the cooling process are performed after the solution process has been performed and before the aging treatment is performed).

Incidentally, all the conditions (temperature conditions, cooling rate conditions, and the like) applied for the treatment (treatment in the solution process) performed on the steel for measuring YS, $YS_1$, and $YS_2$ described above were identical among YS, $YS_1$, and $YS_2$, and all the conditions (temperature conditions and the like) applied for the treatment (aging treatment in the aging treatment process) performed on the steel for measuring $YS_1$ and $YS_2$ were also identical among $YS_1$ and $YS_2$.

YS, $YS_1$, and $YS_2$ were measured by performing a tensile test in accordance with JIS Z 2241 (2011) on three JIS No. 5 tensile test pieces taken from each of the steel.

The steel of examples of the present invention given in Table 2, whose k values were 1.05 or more, were recognized as maraging steel having excellent aging behavior.

On the other hand, the comparative examples other than No. 15 and No. 17 had a k of less than 1.05. In addition, in the case of No. 15 and No. 17, since breaking occurred in the middle of a tensile test due to a decrease in the toughness of steel, evaluation was abandoned.

[Table 1]

| Steel Code | Chemical composition (mass%) | | | | | | | | | | | Note |
|---|---|---|---|---|---|---|---|---|---|---|---|---|
| | C | Si | Mn | P | S | N | Ni | Co | Mo | Ti | Al | |
| A | 0.004 | 0.01 | 0.02 | 0.008 | 0.0032 | 0.0028 | 12.5 | 8.5 | 2.4 | 0.62 | 0.049 | Example Steel |
| B | 0.001 | 0.02 | 0.04 | 0.007 | 0.0022 | 0.0033 | 15.4 | 5.2 | 3.6 | 0.71 | 0.033 | Example Steel |
| C | 0.002 | 0.06 | 0.06 | 0.008 | 0.0029 | 0.0021 | 18.8 | 9.1 | 5.1 | 0.62 | 0.085 | Example Steel |
| D | 0.003 | 0.02 | 0.03 | 0.007 | 0.0022 | 0.0036 | 24.1 | 11.2 | 4.3 | 1.30 | 0.012 | Example Steel |
| E | 0.003 | 0.01 | 0.02 | 0.008 | 0.0029 | 0.0021 | 10.9 | 5.4 | 3.4 | 0.79 | 0.020 | Comparative Steel |
| F | 0.001 | 0.06 | 0.04 | 0.007 | 0.0022 | 0.0036 | 32.1 | 5.9 | 4.9 | 0.56 | 0.034 | Comparative Steel |
| G | 0.001 | 0.02 | 0.01 | 0.003 | 0.0033 | 0.0042 | 18.5 | 4.2 | 5.6 | 1.21 | 0.022 | Comparative Steel |
| H | 0.001 | 0.03 | 0.01 | 0.004 | 0.0021 | 0.0065 | 24.2 | 13.3 | 6.8 | 1.01 | 0.033 | Comparative Steel |
| I | 0.002 | 0.05 | 0.06 | 0.009 | 0.0042 | 0.0023 | 20.2 | 6.6 | 1.4 | 0.72 | 0.071 | Comparative Steel |
| J | 0.001 | 0.02 | 0.07 | 0.002 | 0.0052 | 0.0011 | 16.7 | 7.2 | 7.8 | 1.21 | 0.094 | Comparative Steel |
| K | 0.002 | 0.03 | 0.06 | 0.001 | 0.0028 | 0.0032 | 15.8 | 7.3 | 4.6 | 0.41 | 0.032 | Comparative Steel |

(continued)

| Steel Code | Chemical composition (mass%) | | | | | | | | | | | Note |
|---|---|---|---|---|---|---|---|---|---|---|---|---|
| | C | Si | Mn | P | S | N | Ni | Co | Mo | Ti | Al | |
| L | 0.013 | 0.08 | 0.09 | 0.003 | 0.0011 | 0.0022 | 18.2 | 5.8 | 3.2 | 1.61 | 0.044 | Comparative Steel |

·The remaining components which are different from the components described above are Fe and incidental impurities.

*Underlined portions indicate items out of the range of the present invention.

[Table 2]

| No. | Steel Code | Manufacturing Conditions (Heat Treatment) | | | | | | | Steel Microstructure | k Value | Note |
|---|---|---|---|---|---|---|---|---|---|---|---|
| | | Solution Process | Heating Process | | | Cooling Process | Aging Treatment Process | | | | |
| | | Solution Treatment Temperature (°C) | Ac3 Temperature (°C) | Heating Temperature (°C) | Heating Time (Holding Time) (s) | Average Cooling Rate (°C/s) | Aging Temperature (°C) | Aging Time t (s) | Area Fraction of Strain-induced Martensite (%) | | |
| 1 | A | 900 | 785 | 825 | 2 | 10 | 450 | 6000 | 100 | 1.09 | Example Steel |
| 2 | A | 900 | 785 | 860 | 1000 | 20 | 450 | 6000 | 72 | 1.02 | Comparative Steel |
| 3 | A | 900 | 785 | 825 | 50 | 6 | 450 | 6000 | 71 | 1.01 | Comparative Steel |
| 4 | B | 850 | 706 | 720 | 2000 | 20 | 450 | 6000 | 95 | 1.07 | Example Steel |
| 5 | B | 950 | 706 | 720 | 3500 | 10 | 450 | 6000 | 83 | 1.01 | Comparative Steel |
| 6 | C | 1000 | 690 | 700 | 10 | 15 | 450 | 6000 | 100 | 1.08 | Example Steel |
| 7 | C | 1000 | 690 | 750 | 300 | 15 | 450 | 6000 | 85 | 1.02 | Comparative Steel |
| 8 | D | 950 | 538 | 580 | 50 | 15 | 450 | 6000 | 100 | 1.07 | Example Steel |
| 9 | D | 1000 | 538 | 580 | 500 | 15 | 450 | 6000 | 100 | 1.06 | Example Steel |
| 10 | E | 900 | 780 | 790 | 10 | 15 | 450 | 6000 | 45 | 1.01 | Comparative Steel |
| 11 | F | 900 | 445 | 450 | 10 | 15 | 450 | 6000 | 74 | 0.98 | Comparative Steel |
| 12 | G | 900 | 646 | 650 | 10 | 15 | 450 | 6000 | 95 | 1.01 | Comparative Steel |

| No. | Steel Code | Manufacturing Conditions (Heat Treatment) | | | | | | | | Steel Microstructure | k Value | Note |
|---|---|---|---|---|---|---|---|---|---|---|---|---|
| | | Solution Process | Heating Process | | | Cooling Process | Aging Treatment Process | | | | | |
| | | Solution Treatment Temperature (°C) | Ac3 Temperature (°C) | Heating Temperature (°C) | Heating Time (Holding Time) (s) | Average Cooling Rate (°C/s) | Aging Temperature (°C) | Aging Time t (s) | Area Fraction of Strain-induced Martensite (%) | | | |
| 13 | H | 900 | 646 | 750 | 10 | 15 | 450 | 6000 | 62 | 0.92 | Comparative Steel |
| 14 | I | 900 | 643 | 650 | 10 | 15 | 450 | 6000 | 94 | 1.01 | Comparative Steel |
| 15 | J | 900 | 705 | 720 | 10 | 15 | 450 | 6000 | 95 | Evaluation Abandoned | Comparative Steel |
| 16 | K | 900 | 720 | 740 | 10 | 15 | 450 | 6000 | 94 | 0.92 | Comparative Steel |
| 17 | L | 900 | 667 | 680 | 10 | 15 | 450 | 6000 | 96 | Evaluation Abandoned | Comparative Steel |

*Underlined portions indicate items out of the range of the present invention.

**Claims**

1. A maraging steel, the steel having a chemical composition comprising, by mass%:

> C: 0.02% or less,
> Si: 0.1% or less,
> Mn: 0.1% or less,
> P: 0.01% or less,
> S: 0.01% or less,
> N: 0.01% or less,
> Ni: 12% to 25%,
> Co: 5% to 12%,
> Mo: 2% to 7%,
> Ti: 0.5% to 1.5%,
> Al: 0.01% to 0.1%, and
> the balance being iron and incidental impurities,
> the steel having a steel microstructure comprising, in terms of area fraction, 90% or more of a strain-induced martensite phase.

2. A member comprising the maraging steel according to Claim 1.

3. A method for manufacturing a maraging steel, the method comprising:

> a solution process of performing a solution treatment on steel having the chemical composition according to Claim 1 at a temperature of 800°C or higher and thereafter cooling the steel sheet to room temperature;
> a heating process of heating the steel after the solution process has been performed to a heating temperature equal to or higher than an Ac3 point and equal to or lower than a temperature of Ac3 + 50°C and holding the heated steel at the heating temperature for a holding time of 3000 seconds or less;
> a cooling process of cooling the steel after the heating process has been performed to a cooling stop temperature of 50°C or lower at an average cooling rate of 8°C/s or higher; and
> an aging treatment process of performing an aging treatment on the steel after the cooling process has been performed at a temperature of 400°C or higher and 550°C or lower to obtain a maraging steel.

4. A method for manufacturing a member, the method comprising a process of performing at least one of forming work and joining work on the maraging steel according to Claim 1 to obtain a member.

**EP 4 567 147 A1**

## INTERNATIONAL SEARCH REPORT

| International application No. |
|---|
| **PCT/JP2023/034049** |

### A. CLASSIFICATION OF SUBJECT MATTER

*C22C 38/00*(2006.01)i; *B22F 10/28*(2021.01)i; *C21D 6/00*(2006.01)i; *C21D 9/00*(2006.01)i; *C21D 9/46*(2006.01)i; *C22C 38/14*(2006.01)i

FI: C22C38/00 302N; B22F10/28; C21D6/00 M; C21D9/00 A; C21D9/46 P; C22C38/14

According to International Patent Classification (IPC) or to both national classification and IPC

### B. FIELDS SEARCHED

Minimum documentation searched (classification system followed by classification symbols)

C22C38/00; B22F10/28; C21D6/00; C21D9/00; C21D9/46; C22C38/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 4-165013 A (KAWASAKI STEEL CORP) 10 June 1992 (1992-06-10) entire text | 1-4 |
| A | JP 58-52418 A (KAWASAKI STEEL CORP) 28 March 1983 (1983-03-28) entire text, all drawings | 1-4 |
| A | JP 2018-145516 A (KOBE STEEL LTD) 20 September 2018 (2018-09-20) entire text, all drawings | 1-4 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 November 2023** | **12 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**17**

### INTERNATIONAL SEARCH REPORT
Information on patent family members

International application No.

**PCT/JP2023/034049**

| Patent document cited in search report | | | Publication date (day/month/year) | Patent family member(s) | | | Publication date (day/month/year) |
|---|---|---|---|---|---|---|---|
| JP | 4-165013 | A | 10 June 1992 | (Family: none) | | | |
| JP | 58-52418 | A | 28 March 1983 | (Family: none) | | | |
| JP | 2018-145516 | A | 20 September 2018 | US | 2020/0071804 | A1 | |
| | | | | entire text, all drawings | | | |
| | | | | WO | 2018/159219 | A1 | |
| | | | | EP | 3578678 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7116585 B